# EUROPEAN PATENT SPECIFICATION

(11) **EP 1 012 937 B1**
(45) Date of publication and mention of the grant of the patent: **03.11.2010**
(21) Application number: 97926369.6
(22) Date of filing: 23.04.1997
(51) Int. Cl.: H02G 3/04

(54) **FLEXIBLE CABLE MANAGEMENT SYSTEM**
FLEXIBLES SYSTEM ZUR ANORDNUNG VON KABELN
SYSTEME DE MANIPULATION DE CABLE SOUPLE

(30) Priority: 25.04.1996 US 637390
(43) Date of publication of application: 28.06.2000
(73) Proprietor: Jette, Roger, Babylon, NY 11702 (US)
(72) Inventor: Jette, Roger, Babylon, NY 11702 (US)
(74) Representative: Olsson, Jan
(86) International application number: PCT/US1997/006686
(87) International publication number: WO 1997/040564

(56) References cited:
- DE-A- 1 615 074
- DE-A- 3 742 448
- DE-U- 7 435 122

## Description

### BACKGROUND OF THE INVENTION:

### 1. Field of the Invention:

The present disclosure relates to a cable management system and a cable support apparatus according to the preambles of the appended corresponding independent claims.

### 2. Description of related art:

A cable support apparatus according to above is known through DE 7 435 122 U and a modular cable support system according to above is known through DE 1 615 074 A. However, these known cable support apparatus and modular cable support system do not fully address the problem arising when using them for laying certain cables which may not be in contact with certain surfaces, especially walls and floors of a building. When using this apparatus and this system known for laying such cables the risk is high that such cables come into contact with or will rest on parts of such surfaces, especially floors and walls, which may for some cable, such as fiberoptic or copper data transmission cables, result in disturbances, such as in signal attenuation due to damage, which may often be the result of the cable being positioned against such surfaces.

### SUMMARY OF THE INVENTION

It is an object of the present invention to solve this problem and provide a cable support apparatus and a modular cable support system of the type defined in the introduction removing any risk of negative influence upon cables emanating from contacts thereof with such surfaces.

This object is according to the invention obtained by providing such a cable support apparatus, characterized in that at least one of the plurality of support members includes at least one leg portion configured and dimensioned to maintain cables positioned on the apparatus at a predetermined distance away from a base, and a modular cable support system being characterized in that the plurality of support members include at least one leg portion configured and dimensioned to maintain cables positioned on the support system at a predetermined distance away from a base. Thanks to said at least one leg portion it will be ensured that cables positioned on the apparatus and on the support system, respectively, may not be damaged by entering into contact with a said base.

### BRIEF DESCRIPTION OF THE DRAWINGS:

For a better understanding of the invention, reference is made to the following description of exemplary embodiments thereof, and to the accompanying drawing figures, wherein:
FIG. 1 is a perspective view of the flexible cable management system in accordance with the present invention;
FIG. 2A is an end view of an enter/exit component;
FIG. 2B is a side view of an enter/exit component;
FIG. 2C is a top view of an enter/exit component;
FIG. 3A is a top view of a flexible spine and a plurality of spoke members;
FIG. 3B is a side view of a spoke member;
FIG. 3C is a side view of a flexible spine member having spoke members and enter/exit component installed thereon;
FIG. 4A is a side view of a flexible cable management system fastened to concrete;
FIG. 4B is a side view of a flexible cable management system fastened to wallboard;
FIG. 4C is a side view of two support sections connected by means of a mechanical clamp;
FIG. 5 is an end view of a cable management system; of the same type as that according to the present invention;
FIG. 6 is a top view of the system of FIG. 5, which shows the flexibility of such a cable management system;
FIG. 7 is an end view of a further cable management system of the same type as that according to the present invention; and
FIG. 8 is a perspective view of the cable management system of FIG. 7.

### DETAILED DESCRIPTION:

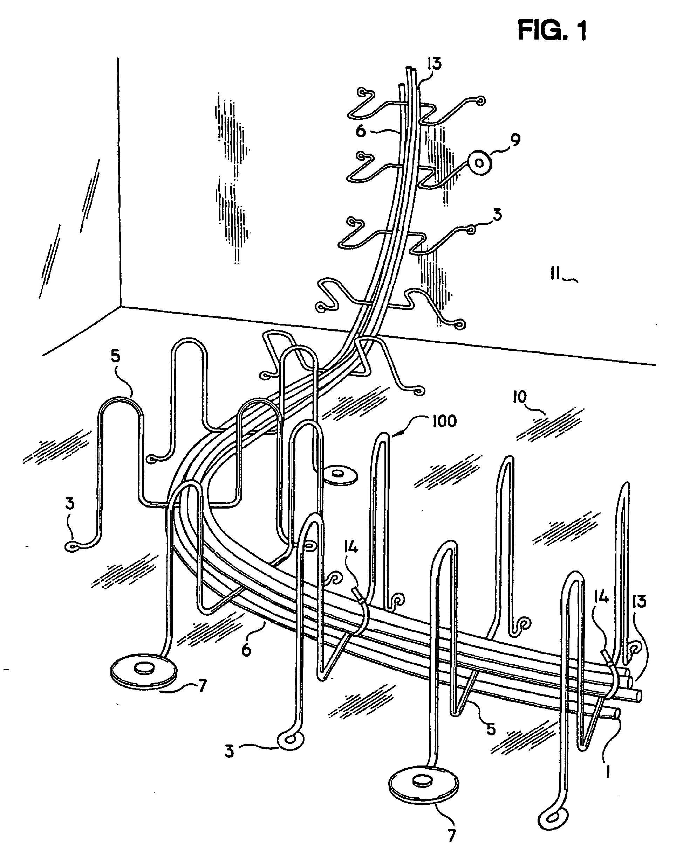

Referring to the drawings in detail, and initially to FIG. 1, the presently disclosed flexible cable management system 100 is shown having both lateral and vertical bends formed therein. Such bends can be formed without the use of tools or other devices. Multiple fastener points 3 allow the flexible cable management system 100 to be secured in whatever position it has been bent, by means of a washered fastener 7 to a concrete surface 10 or a wall board anchor 9 to a wall board surface 11. A plurality of cables 13 are installed within the flexible cable management system and are capable of being secured to any of a plurality of cable support members such as spokes 5 with a standard cable fastener 14. Sections of flexible cable management system 100 can be joined together at a connector tail 1.

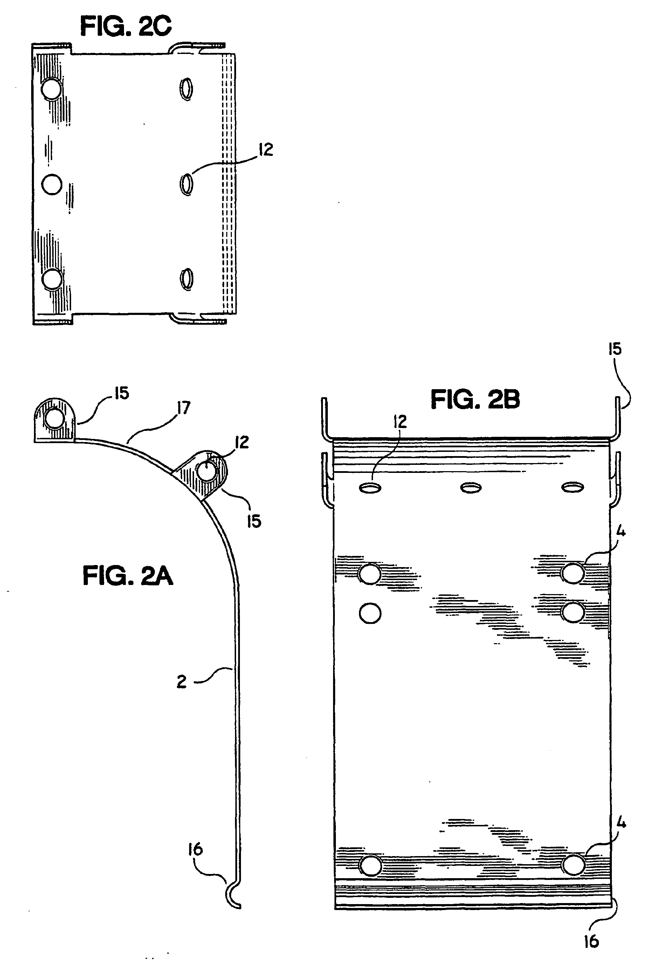

Referring now to FIGS. 2A, 2B and 2C, an enter/exit component 2 is illustrated in the three views. The enter/exit component 2 is indexed to the flexible cable management system 100 by means of a spoke index and secured by wire ties passed through attachment holes 4. A cable may be secured to enter/exit component 2 by means of wire ties passed through wire tie attachment holes 12 and further held in place by means of cable containment tabs 15. A cable radius 17 is formed in enter/exit component 2 to preclude the installed cable from bending too tightly or kinking.

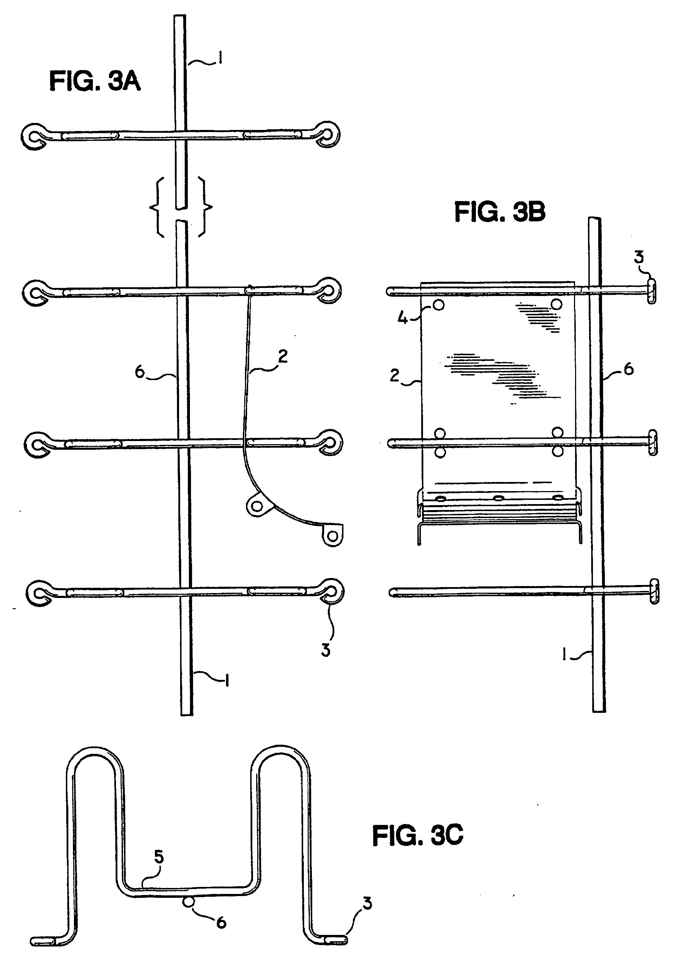

In FIGS. 3A, 3B and 3C, a flexible spine 6, spokes 5 and enter/exit component 2 are shown in their assembled positions.

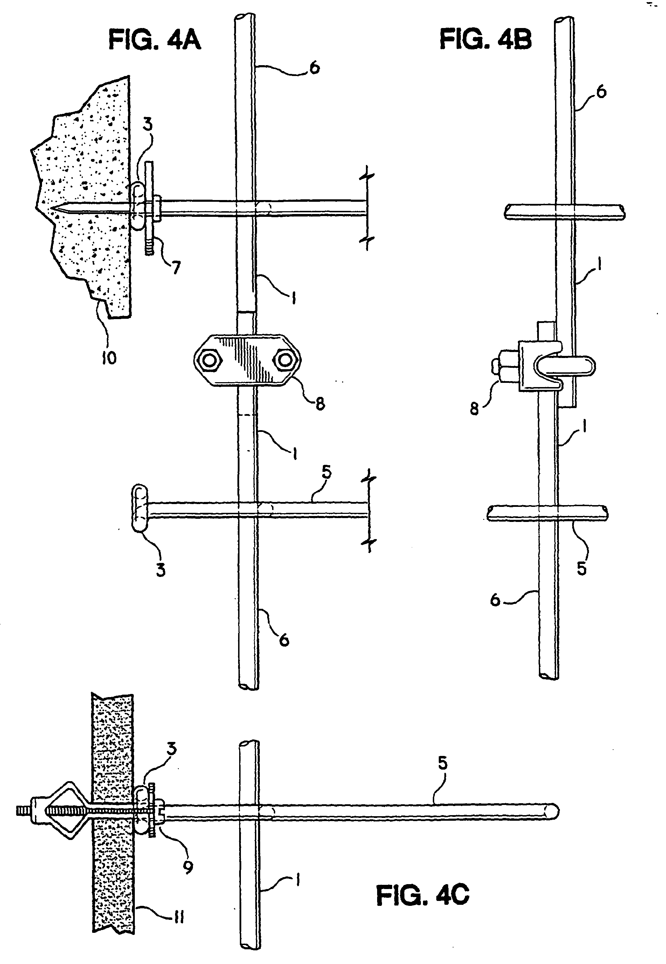

Referring now to FIGS. 4A, 4B and 4C, various means for attaching the flexible cable management system 100 are illustrated. In FIG. 4A, flexible cable management system 100 is shown anchored to a concrete surface 10 at fastening point 3 by means of washered fastener 7. In FIG. 4B, flexible cable management system 100 is anchored to a wall board 11 at a fastener point 3 by means of a wall board fastener 9. Two support sections are shown joined together at connector tails 1 by means of a standard clamp 8, in FIG. 4C.

The flexible cable management system 100 includes a series of formed wire spokes 5 welded to a single spine 6. The wire spokes 5 are formed in a fashion to allow the maneuvering and protection of the cables 13 that are installed in the system. Having a single spine allows the flexible cable management system 100 to be bent by hand in any direction necessary. Each spoke 5 has two fastener points 3 which allow the flexible cable management system 100 to be secured to the installation surface at multiple points along its length. Preformed proprietary enter/exit components 2 attach to spokes 5 of the flexible cable management system 100 at any point allowing the cable 13 to exit the flexible cable management system 100 without the risk of damage due to linking. Flexible cable management system 100 is designed in such a way that it can be installed beneath raised floor, on existing floors, on walls and risers or suspended from a ceiling.

During installation, the technician will lay out the path of the cable runs on the primary floor of an installation area between the stantions of the raised floor. The technician would then place eight foot sections of the flexible cable management system 100 on the layout lines, bending by hand where necessary either laterally, up a wall or down a riser. Then, using a standard power charged stud gun and washered fasteners, randomly secure the flexible cable management system 100 to the installation area floor by means of the built in fastener rings. Anti-kink enter/exit components 2 would be installed on spokes 5 of the flexible cable management system 100 where it is necessary for cables 13 to exit the system to reach their destination. After the network of flexible cable management system 100 is completed, the technician would place copper and/or fiber optic cable into flexible cable management system 100 and randomly secure it using cable ties, to spokes 5 of flexible cable management system 100. Flexible cable management system 104 allows cable to be organized, routed and protected against crushing or kinking.

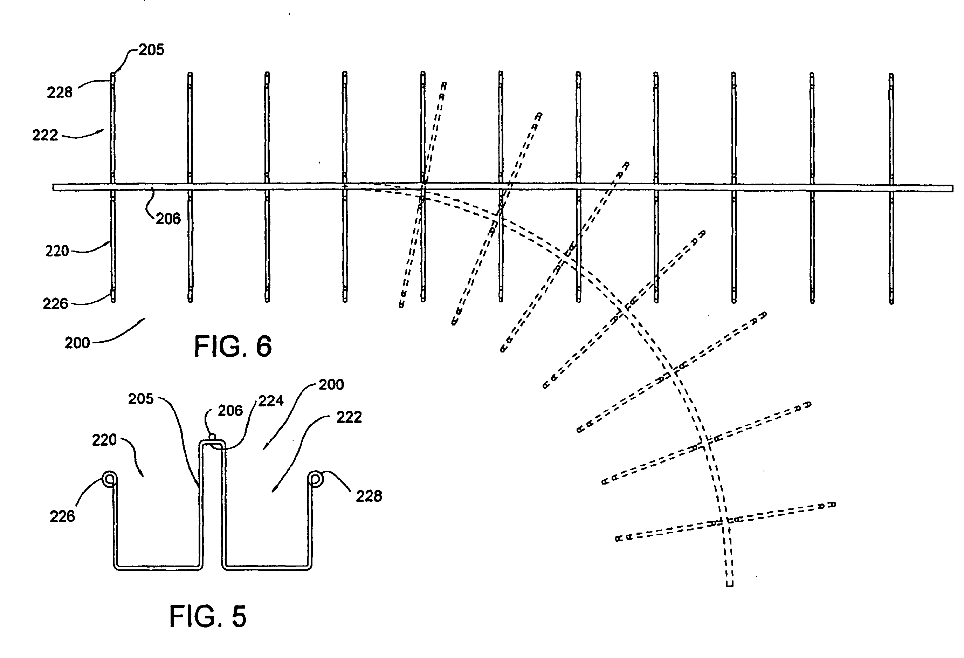

Referring to FIGS. 5 and 6, a cable management system of the same type as that according to the present invention is shown generally as flexible cable tray 200. Many of the overall characteristics of cable management system 100 are also featured in cable tray 200. Accordingly, the following description will focus mainly on the unique structural and functional aspects of cable tray 200. It is within the scope of the present disclosure, however, that the assembly, connection and fastening features described above in connection with cable management system 100 may apply to cable tray 200 as well.

Cable tray 200 is particularly suited for use in installations wherein it is desirable or even necessary to route cable bundles overhead. The prior practice in some installations of simply laying cable on the top of suspended ceiling gridwork now violates electrical code requirements for many locations. Further, cabling such as fiber optic or copper data transmission cable is subject to signal attenuation due to damage, no matter how slight, which may often be the result of the cable being haphazardly positioned along the top of ceiling grid structure and thus exposed to such damage. Cable tray 200 provides a novel way of suspending cable bundles from the framework of the building structure itself, for example by bracketing the tray to studs or the like.

Similar to cable management system 100, cable tray 200 is preferably constructed of wire stock and includes a flexible spine 206 which runs centrally along the length of cable tray 200. This configuration provides the maximum flexibility for cable tray 200 and, therefore maximum versatility during installation. A dual opening cable support member 205 is formed by bending the wire stock to form cable receiving portions 220 and 222 disposed one on either side of central spine 206. The two receiving portions may be defined by a single piece of wire stock which is bent to form a web section 224. Central spine 206 may be attached to web portion 224 either transversely along the top thereof, as shown in FIG. 5, or the bottom thereof, by any suitable known methods, for example, welding.

The central location of spine 206 facilitates the self balancing feature of cable tray 200. In particular, once cable tray 200 is installed, cable is preferably loaded evenly into each of receiving portions 220 and 222 to effectuate a balanced load in cable tray 200. Looped ends 226 and 228 are provided on cable support 205 to reduce the likelihood of inadvertent damage due to contact of cables with rough edges during installation.

As shown in phantom lines in FIG. 6, cable tray 200 may be flexed significantly to either side, to effectuate at least about a 90 degree or even greater turn of cable tray 200 without individual cable support sections 205 making contact with each other. Similarly, cable tray 200 may transition from a horizontal run to a vertical run.

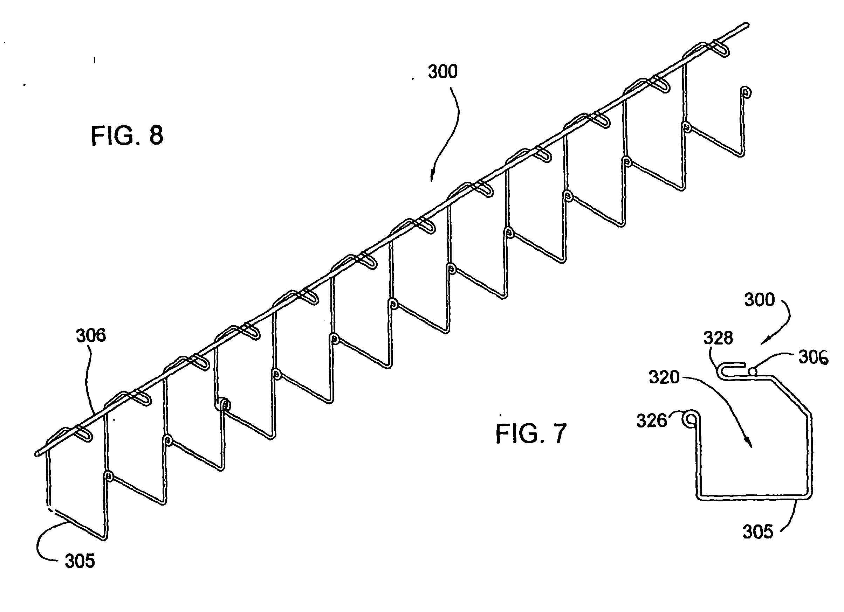

Referring to FIGS. 7 and 8, a further cable management system of the same type as that according to the present invention is shown generally as cable tray 300. Cable tray 300 features partially enclosed cable receiving portion 320. Spine 306 is attached to cable support members 305 transversely along a top segment thereof in similar manner as set forth above for cable tray 200 and cable management system 100. Spine 306 is attached to cable supports 305 substantially directly over the center of gravity of the unit as a whole. In this manner, when cable tray 300 is loaded with cable evenly within receiving portion 320, there will not be any undesirable torque applied to spine 306 which is preferably attached to the building structure by suitable brackets or the like. End portions 326 and 328 are formed to bend away from the opening into receiving portion 320 to minimize the chance of even the slightest amount of damage to the cabling being placed in the receiving portion 320.

Although the illustrative embodiments of the present disclosure have been described herein with reference to the accompanying drawings, it is to be understood that the disclosure is not limited to those precise embodiments, and that various other changes and modifications may be affected therein by one skilled in the art without departing from the scope of the disclosure. All such changes and modifications are intended to be included within the scope of the disclosure as defined by the appended claims.

## Claims

1. A cable support apparatus (100), which comprises:
an elongate flexible spine member (6) selectively bendable into a number of different configurations; and
a plurality of support members (5) attached to the elongate flexible spine member (6) along the length thereof, the plurality of support members (5) positioned relative one another to permit substantial bending by hand of the elongate flexible spine member (6), each of the plurality of support members (5) defining at least one area adapted to receive and support a cable therein **characterized in that** at least one of the plurality of support members (5) includes at least one leg portion configured and dimensioned to maintain cables positioned on the apparatus at a predetermined distance away from a base.

2. A cable support apparatus as recited in claim 1, **characterized in that** each of plurality of support members (5) are arrayed along the elongate flexible spine member (6) to define a pathway to support and direct a series of cable.

3. A cable support apparatus as recited in claim 1, **characterized in that** the elongate flexible spine member (6) has a circular cross-section.

4. A cable support apparatus as recited in claim 1, **characterized in that** each of the plurality of support members (5) have a substantially U-shape in cross-section.

5. A cable support apparatus as recited in claim 1, **characterized in that** each of the plurality of support members (5) are attached at an intermediate portion thereof on the elongate flexible spine member (6).

6. A cable support apparatus as recited in claim 1, **characterized in that** at least one of the plurality of support members (5) includes a fastener point (3) adapted to facilitate mounting of the cable support apparatus to a base.

7. A cable support apparatus as recited in claim 1, **characterized in that** it further comprises at least one wall component (2) which defines a smooth transition surface to direct cabling supported by the apparatus along a non-linear path to prevent damage to the cabling.

8. A cable su port apparatus as recited in claim 1, **characterized in that** the elongate flexible spine member (6) is solid in cross-section.

9. A cable support apparatus as recited in claim 1, **characterized in that** at least one of the support members (5) defines two areas adapted to receive and support cable therein.

10. A cable support apparatus as recited in claim 9, wherein the elongate flexible spine is disposed along the support members such that the two areas are disposed one on either side of the elongate flexible spine.

11. A cable support apparatus as recited in claim 1, **characterized in that** the elongate flexible spine member (6) is disposed centrally above the at least one area adapted to receive and support cable therein.

12. A modular cable support system, which comprises:
a series of support sections, each support section including an elongate flexible spine member (6), and a plurality of support members (5) attached to the elongate flexible spine member (6) along the length thereof, the plurality of support members (5) positioned relative one another to permit substantial bending by hand of the elongate flexible spine member (6), each of the plurality of support members (5) defining at least one partially enclosed area adapted to receive and support a cable therein; and
means (8) for connecting the plurality of support sections, **characterized in that** the plurality of support members include at least one leg portion configured and dimensioned to maintain cables positioned on the support system at a predetermined distance away from a base.

13. A modular cable support system as recited in claim 12,**characterized in that** each of the plurality of support members (5) are formed as a continuous member from bendable material.

14. A modular cable support system as recited in claim 12, **characterized in that** the plurality of support members (5) are formed from wire stock.

15. A modular cable support system as recited in claim 12, **characterized in that** the means (8) for connecting the plurality of support sections includes a mechanical clamp.

16. A modular cable support system as recited in claim 12, **characterized in that** each of the plurality of support members (5) are arrayed along the elongate flexible spine member (6) to define a pathway to support and direct a series of cable.

17. A modular cable support system as recited in 12, **characterized in that** the elongate flexible spine member (6) has a circular cross-section.

18. A modular cable support system as recited in claim 12, **characterized in that** each of the plurality of supports members (5) have a substantially U-shape in cross-section.

19. A modular cable support system as recited in claim 12, **characterized in that** the plurality of supports members (5) are attached at an intermediate portion thereof to the elongate flexible spine member (6).

20. A modular cable support system as recited in claim 12, **characterized in that** least one of the plurality of support members (5) includes a fastener point (3) adapted to facilitate mounting of the cable support system to a base.

21. A modular cable support system as recited in claim 12, **characterized in that** it further comprises at least one wall component (2) attached to at least one of the plurality of support members (5), the at least one wall component (2) defining a smooth transition surface to direct cabling supported by the support system along a non-linear path to prevent damage to the cabling.

## Patentansprüche

1. Kabeltrag-Vorrichtung (100), umfassend einen länglichen, flexiblen Gitterstab-Körper (6), der selektiv in eine Anzahl unterschiedlicher Konfigurationen biegbar ist, und mehrere Tragkörper (5), die an dem länglichen, flexiblen Gitterstab-Körper (6) entlang seiner Länge angebracht sind, wobei die Mehrzahl der Tragkörper (5) in Bezug aufeinander so angeordnet ist, daß sie ein erhebliches Biegen des länglichen, flexiblen Gitterstab-Körpers (6) von Hand ermöglichen, und jeder dieser Tragkörper (5) wenigstens einen Bereich bildet, der in der Lage ist, ein Kabel aufzunehmen und zu tragen, **dadurch gekennzeichnet, daß** wenigstens einer der mehreren Tragkörper (5) wenigstens einen Beinteil aufweist, der so gestaltet und dimensioniert ist, daß er die auf der Vorrichtung angeordneten Kabel in einem bestimmten Abstand von einer Bodenfläche trägt.

2. Kabeltrag-Vorrichtung nach Anspruch 1, **dadurch gekennzeichnet, daß** mehrere Tragkörper (5) längs des flexiblen Gitterstab-Körpers (6) aufgereiht sind, um eine Bahn zum Tragen und Ausrichten einer Reihe Kabel zu bilden.

3. Kabeltrag-Vorrichtung nach Anspruch 1, **dadurch gekennzeichnet, daß** der längliche, flexible Gitterstab-Tragkörper (6) einen kreisrunden Querschnitt aufweist.

4. Kabeltrag-Vorrichtung nach Anspruch 1, **dadurch gekennzeichnet, daß** jeder der vielen Tragkörper (5) einen im wesentlichen U-förmigen Querschnitt besitzt.

5. Kabeltrag-Vorrichtung nach Anspruch 1, **dadurch gekennzeichnet, daß** jeder der vielen Tragkörper (5) an einem Körper-Mittelteil auf dem länglichen, flexiblen Gitterstab-Körper (6) angebracht ist.

6. Kabeltrag-Vorrichtung nach Anspruch 1, **dadurch gekennzeichnet, daß** wenigstens einer der vielen Tragkörper (5) einen Befestigungspunkt (3) aufweist, der die Anbringung der Kabeltrag-Vorrichtung auf einer Bodenfläche erleichtert.

7. Kabeltrag-Vorrichtung nach Anspruch 1, **dadurch gekennzeichnet, daß** sie des weiteren wenigstens eine Wandkomponente (2) aufweist, die eine glatte Übergangsfläche bildet, um das von der Vorrichtung getragene Kabel in eine nichtlineare Bahn zu lenken und **dadurch** eine Beschädigung der Verkabelung zu verhindern

8. Kabeltrag-Vorrichtung nach Anspruch 1, **dadurch gekennzeichnet, daß** der längliche, flexible Gitterstab-Körper (6) einen massiven Querschnitt hat.

9. Kabeltrag-Vorrichtung nach Anspruch 1, **dadurch gekennzeichnet, daß** wenigstens einer der Tragkörper (5) zwei Bereiche bildet, die in der Lage sind, das Kabel aufzunehmen und zu tragen.

10. Kabeltrag-Vorrichtung nach Anspruch 9, **dadurch gekennzeichnet, daß** der längliche, flexible Gitterstab längs der Tragkörper so angeordnet ist, daß je einer der beiden Bereiche auf jeder Seite des länglichen, flexiblen Gitterstabs liegt.

11. Kabeltrag-Vorrichtung nach Anspruch 1, **dadurch gekennzeichnet, daß** der längliche, flexible Gitterstabkörper (6) mittig über wenigstens einem Bereich angeordnet ist, um in sich das Kabel aufzunehmen und zu tragen.

12. Modulares Kabeltrag-System, umfassend eine Reihe Tragabschnitte, wobei jeder Tragabschnitt einen länglichen, flexiblen Gitterstab-Körper (6) aufweist und mehrere Tragkörper (5) an dem flexiblen Gitterstab-Körper (6) entlang seiner Länge angebracht sind, mehrere Tragkörper (5) relativ zueinander so angeordnet sind, daß sie ein erhebliches Biegen des länglichen, flexiblen Gitterstab-Körpers (6) von Hand ermöglichen, jeder der vielen Tragkörper (5) wenigstens einen teilweise umschlossenen Bereich bildet, in dem ein Kabel aufgenommen und getragen werden kann, und wobei eine Einrichtung (8) zur Verbindung der vielen Tragabschnitte vorhanden ist und die vielen Tragabschnitte mit wenigstens einem Beinteil ausgestattet sind, der so gestaltet und dimensioniert ist, daß die Kabel, die auf dem Tragsystem angeordnet sind, in einem vorbestimmten Abstand von einer Bodenfläche gehalten werden.

13. Modulares Kabeltrag-System nach Anspruch 12, **dadurch gekennzeichnet, daß** jeder der vielen Tragkörper (5) als ein durchgehender Körper aus biegbarem Material geformt ist.

14. Modulares Kabeltrag-System nach Anspruch 12, **dadurch gekennzeichnet, daß** die vielen Tragkörper (5) aus Drahtmaterial geformt sind.

15. Modulares Kabeltrag-System nach Anspruch 12, **dadurch gekennzeichnet, daß** die Einrichtung (8) zum Verbinden der vielen Tragabschnitte eine mechanische Klammer aufweist.

16. Modulares Kabeltrag-System nach Anspruch 12, **dadurch gekennzeichnet, daß** jeder der vielen Tragkörper (5) längs der länglichen, flexiblen Gitterstabkörper (6) aufgereiht ist, um einen Pfad zum Tragen und Ausrichten einer Reihe Kabel zu bilden.

17. Modulares Kabeltrag-System nach Anspruch 12, **dadurch gekennzeichnet, daß** der längliche, flexible Gitterstabkörper (6) einen kreisrunden Querschnitt hat.

18. Modulares Kabeltrag-System nach Anspruch 12, **dadurch gekennzeichnet, daß** jeder der vielen Tragkörper (5) einen im wesentlichen U-förmigen Querschnitt hat.

19. Modulares Kabeltrag-System nach Anspruch 12, **dadurch gekennzeichnet, daß** die vielen Tragkörper (5) mit einem Mittelteil an dem länglichen, flexiblen Gitterstabkörper (6) angebracht sind.

20. Modulares Kabeltrag-System nach Anspruch 12, **dadurch gekennzeichnet, daß** wenigstens einer der vielen Tragkörper (5) einen Befestigungspunkt (3) aufweist, der die Befestigung des Kabeltrag-Systems an einer Bodenfläche vereinfacht.

21. Modulares Kabeltrag-System nach Anspruch 12, **dadurch gekennzeichnet, daß** es des weiteren wenigstens eine Wandkomponente (2) aufweist, die an wenigstens einem der vielen Tragkörper (5) angebracht ist, wobei die wenigstens eine Wandkomponente (2) eine glatte Übergangsfläche besitzt, um die von dem Tragsystem getragenen Kabel entlang einer nicht geraden Bahn zu lenken und **dadurch** eine Beschädigung der Verkabelung zu verhindern.

## Revendications

1. Appareil support de câble (100), qui comprend :
un élément (6) de colonne d'ossature flexible allongé pouvant être courbé de manière sélective dans une variété de configurations différentes, et
une pluralité d'éléments de support (5) fixés à l'élément de colonne d'ossature flexible allongé (6) le long de toute sa longueur, la pluralité d'éléments de support (5) étant positionnés les uns par rapport aux autres pour permettre une courbure manuelle substantielle de l'élément de colonne d'ossature flexible allongé (6), chaque élément de la pluralité d'éléments de support (5) définissant au moins une zone adaptée à recevoir et à supporter un câble,
**caractérisé en ce qu'**au moins un parmi la pluralité d'éléments support (5) inclut au moins une partie de jambe support configurée et dimensionnée pour maintenir les câbles positionnés sur l'appareil à une distance prédéterminée d'une base.

2. Appareil support de câble selon la revendication 1, **caractérisé en ce que** chaque élément de la pluralité d'éléments support (5) déployés le long de l'élément de colonne d'ossature flexible allongée (6) définit un trajet pour supporter et diriger une série de câbles.

3. Appareil support de câble selon la revendication 1, **caractérisé en ce que** l'élément de colonne d'ossature flexible allongée (6) présente une section transversale circulaire.

4. Appareil support de câble selon la revendication 1, **caractérisé en ce que** chaque élément de la pluralité d'éléments de support (5) présente une section transversale essentiellement en forme de U.

5. Appareil support de câble selon la revendication 1, **caractérisé en ce que** chaque élément de la pluralité d'éléments support (5) est fixé au niveau d'une partie intermédiaire de celui-ci à l'élément de colonne d'ossature flexible allongée (6).

6. Appareil support de câble selon la revendication 1, **caractérisé en ce qu'**au moins un parmi la pluralité des éléments de support (5) inclut un point de fixation (3) adapté pour faciliter le montage de l'appareil support de câble sur une base.

7. Appareil support de câble selon la revendication 1, **caractérisé en ce qu'**il comprend en outre au moins un composant de paroi (2) qui définit une surface de transition lisse pour le câblage direct supporté par l'appareil le long d'un trajet non linéaire afin d'éviter d'endommager le câblage.

8. Appareil support de câble selon la revendication 1, **caractérisé en ce que** l'élément de colonne d'ossature flexible allongée (6) est rigide en section transversale.

9. Appareil de support de câble selon la revendication 1, **caractérisé en ce qu'**au moins un des éléments support (5) définit deux zones adaptées à recevoir et à supporter le câble à l'intérieur.

10. Appareil support de câble selon la revendication 9, **caractérisé en ce que** la colonne d'ossature flexible allongée est disposée le long des éléments support de façon à ce que les deux zones soient disposées de part et d'autre de la colonne d'ossature flexible allongée.

11. Appareil support de câble selon la revendication 1, **caractérisé en ce que** l'élément de colonne d'ossature flexible allongée (6) est placé de manière centrale au-dessus de la au moins une zone adaptée à recevoir et à supporter un câble à l'intérieur.

12. Système de support de câble modulaire, **caractérisé en ce qu'**il comprend :
une série de sections de support, chaque section de support incluant un élément de colonne d'ossature flexible allongée (6) et une pluralité d'éléments support (5) fixés à l'élément de colonne d'ossature flexible allongée (6) le long de celle-ci, la pluralité d'éléments support (5) étant positionnés les uns par rapport aux autres pour permettre une courbure manuelle substantielle de l'élément de colonne d'ossature flexible allongée (6), chaque élément de la pluralité d'éléments support (5) définissant au moins une zone partiellement close adaptée à recevoir et supporter un câble à l'intérieur, et
un moyen de connexion (18) pour connecter la pluralité des sections de support, la pluralité d'éléments support incluant au moins une partie de la jambe support configurée et dimensionnée afin de maintenir les câbles disposés sur le système support à une distance prédéterminée d'une base.

13. Système support de câble modulaire selon la revendication 12, **caractérisé en ce que** chaque élément de la pluralité des éléments support (5) est réalisé sous la forme d'un élément continu à partir d'un matériau pliable.

14. Système support de câble modulaire selon la revendication 12, **caractérisé en ce que** la pluralité d'éléments support (5) est formée à partir de stock de câble.

15. Système support de câble modulaire selon la revendication 12, **caractérisé en ce que** le moyen (8) pour connecter la pluralité de sections support comporte une pince mécanique.

16. Système support de câble modulaire selon la revendication 12, **caractérisé en ce que** chaque élément de la pluralité des éléments support (5) est déployé le long de l'élément de colonne d'ossature flexible allongée (6) afin de définir un trajet pour supporter et diriger une série de câbles.

17. Système support de câble modulaire selon la revendication 12, **caractérisé en ce que** l'élément de colonne d'ossature flexible allongée (6) présente une section transversale circulaire.

18. Système support de câble modulaire selon la revendication 12, **caractérisé en ce que** chaque élément de la pluralité d'éléments support (5) présente une forme essentiellement en U en section transversale.

19. Système support de câble modulaire selon la revendication 12, **caractérisé en ce que** la pluralité d'éléments support (5) est fixée par une partie intermédiaire de celui-ci à l'élément de colonne d'ossature flexible allongée (6).

20. Système de support de câble modulaire selon la revendication 12, **caractérisé en ce qu'**au moins un parmi la pluralité d'éléments support (5) comporte un point de fixation (3) adapté à faciliter le montage du système de support de câble à une base.

21. Système de support de câble modulaire selon la revendication 12, **caractérisé en ce qu'**il comprend en outre au moins un composant de paroi (2) fixé à au moins un parmi la pluralité des éléments support (5), le au moins un composant de paroi (2) définissant une surface de transition lisse afin de diriger le câblage supporté par le système support le long d'un trajet non linéaire pour empêcher toute dégradation du câblage.
